Europäisches Patentamt

**European Patent Office**

Office européen des brevets

(11) Publication number: **0 250 777**
**A2**

## (12) EUROPEAN PATENT APPLICATION

(21) Application number: **87106467.1**

(22) Date of filing: **05.05.87**

(51) Int. Cl.⁴: **G06F 3/12**

(30) Priority: **13.06.86 US 873759**

(43) Date of publication of application:
**07.01.88 Bulletin 88/01**

(84) Designated Contracting States:
**DE FR GB IT**

(71) Applicant: **International Business Machines Corporation**
**Old Orchard Road**
**Armonk, N.Y. 10504(US)**

(72) Inventor: **Gentry, Milton Leon, Jr.**
**Route 7, Box 7M**
**Leander Texas 78641(US)**
Inventor: **Levine, Frank Eliot**
**9406 Chapel Down Street**
**Austin Texas 78729(US)**

(74) Representative: **Appleton, John Edward**
**IBM United Kingdom Limited Intellectual**
**Property Department Hursley Park**
**Winchester Hampshire SO21 2JN(GB)**

(54) Improvements in methods and apparatus for controlling printers.

(57) A method of, and apparatus for, controlling the printing functions of a printer from an application running on a processing system. The application comprises a user interface for inserting and defining a generic printer control within the text of a document to be printed to control printer functions. This is a generic control that can be defined to be any printer function desired. The user interface comprises a menu for selecting a control number within a document text, and a printer function table for correlating the control number with a printer control sequence that specifies a printing function.

FIG. 1

# IMPROVEMENTS IN METHODS AND APPARATUS FOR CONTROLLING PRINTERS

This invention relates to data processing systems having a printer, and more particularly having a user interface within an application program running on the processing system for controlling the printing functions of a printer.

A printer is commonly one of the output devices attached to a processing system. In order for a printer to print, data has to be sent to it. The processing system sends a data stream of alphanumeric characters to the printer for printing. If the data stream representation of an "A" is sent to it, the printer will print an "A". There are also special controls in the form of data stream sequences that a printer understands that are specific to a particular printer which causes it to perform special printing functions as opposed to printing actual text. For example, if a predefined data stream is sent to a printer, the printer will recognize it and print according to the data stream sent. If a printer has color functions, it will print in yellow if the data stream for printing in yellow is sent to it. For a particular printer, the data stream for printing in yellow may be the hexadecimal code "1B49". Once it receives that control, everything that is sent to it will be printed in yellow. The printer will continue to print in yellow until another control is sent to tell the printer to print another color.

The type of printer that is connected to the processing system commonly controls the actual representation of the symbols, characters, and numbers that are printed by the printer from the data stream of the processing system. Consequently, for identical data streams from a processing system, a printed document may appear differently for various types of printers.

For example, suppose printer A has the capability to print in color. For the particular printer A, printing in yellow may occur when the hexadecimal code 1B49, referred to as a control sequence, in the data stream is sent to it from the processor. However, another printer, printer B, may not be capable of printing in color. Therefore, when printer B receives a data stream with a control sequence having the hexadecimal code 1B49, printing in yellow will not occur. Additionally, for that particular printer, the hexadecimal string 1B49 may control another printing mode. For example, printer B may print in emphasized mode when that particular control sequence, or hexadecimal code, is received. This type of scenario occurs because each printer specifies its own control sequences associated with the printing functions of that particular printer. A manual that specifies for the user the control sequence for each printing function is usually supplied with the printer.

A problem arises when either different control sequences are specified for a printing function on various printers, or when these various types of printers produce different printing modes for a given control sequence. An application running on the processing system that utilizes the printing functions of a printer has to be tailored in such a way as to be adaptable to the various ways printers accept information for various printing functions. In this way, an application may utilize different printers and still achieve consistent results from specified printing functions.

It has been known to solve the above stated problem by tailoring an application, such as a word processing program, to the more general printing functions a majority of printers were likely to have. For example, an application would designate specific keys on a keyboard to support certain printing functions. To underline, a user would hit the appropriate key designated by the application for underlining. Additionally, the program was tailored with a file called a Printer Function Table. This table within the application listed these printing functions supported by the application that every printer was likely to have. The user could then input into the table the control sequences specified in the manual of a particular printer that were associated with the printing functions listed in the table.

For example, if a printer printed in underline mode when it received a control sequence of 1B5F, this control sequence, 1B5F, would be written by the user into the Printer Function Table of an application program which defined underlining. As the user hit the appropriate keys on the keyboard to cause underlining in the application program being used, the program would store this information in its own defined data stream. However, when the application sent this information to the printer, the control sequence from the Printer Function Table for underlining would be sent to the printer. In this way, no matter what printer was being used, the correct control sequence for underlining would be sent to the printer - as long as the correct control sequence for that printer's printing function had been specified in the Printer Function Table.

However, an application program that utilizes the above tailoring technique has its limitations. For instance, the determination of which printer functions an application will support is made at the time an application program is developed. If a determination is made to support printing functions that most printers are likely to have, not all printing functions of every printer is supported. Additionally, once an application is designed to support certain printing functions, additional functions can not be supported later. Therefore, if a printer is later developed with a higher level of functions than what was anticipated at the time the application program was created, the application program will not be able to support the higher level functions of the printer.

For example, at present day, there are high function printers that have additional features such as color support, or the ability to change the shape of the character, which are not specifically supported by an application. In other words, the application was not developed to acknowledge specific keys on a keyboard that a user can utilize to interface with the application to designate a printing mode such as color or character shape. Additionally, when the application was created, no menu entry was included in the Printer Function Table of the application listing these additional printing functions. As such, the user cannot input the control sequences of the printer for printing functions not specifically listed in the Printer Function Table of the application.

According to the invention there is provided a method for controlling printing functions of a printer connected to a processing system having the ability to create and edit text documents, said method comprising: inserting control numbers at specified locations in said text document; and correlating independently from said document said control numbers with a control number definition.

According to a second aspect of the invention there is provided a data processing system having an interactive display terminal, a printer, and an application running on said processing system for creating and editing text documents, wherein a data stream of said text document is sent to the printer, said processing system comprising: means for inserting control numbers within the text documents; a printer function table containing said control numbers; means for defining said control numbers in said printer function table; and means for replacing said control numbers within the text document with said definition of said control numbers from said printer function table in said data stream to said printer.

In the application of this invention, a user interface to printer functions allows a user to implement printer functions not otherwise provided for in an application program. A user is not limited to using only those printing functions having a designated key defined for it in an application. Furthermore, a user can specify control sequences for printer functions that are not previously specified in a printer function table.

This is achieved by a generic printer control which a user can insert into a document and define in a printer function table of an application. The definition of the generic printer control as defined in the printer function table may comprise a plurality of printer control sequences, or a file name of a file containing data to be sent to the printer, or both.

By defining the generic printer control in a table separate from the document, the meaning of the generic printer control can be changed without changing the text document. The same text document can be printed with different printers using a separate printer function table for each printer. Furthermore, if a file name is used to define the generic printer control in the printer function table, the contents of the file can be changed to achieve different printing functions. In this case, neither the document nor the printer function table needs to be changed to achieve the different printing functions.

The application of this invention comprises a text editor task, a profile task, and a print task. In text editor task, a control number is selected from a menu at the desired location within the text. This control number becomes a user defined control within the edited text. In the profile task, the user defined control is separately defined with a control number definition referencing printer control sequences of specific printing functions. During print task, the printer control sequence is inserted into the text data stream in place of the user defined control.

The text editor task of the application interface comprises a menu selectable by a user while in a text editing mode of the application. The menu provides selectable control numbers. The user selects an appropriate control number at a desired location in the edited text where a printing function such as underlining, emphasis or color printing is desired. The user defined control is linked to a definition in a printer function table through the control number that was entered on the menu and stored within the user defined control.

The profile task of the application interface comprises a Printer Function Table which is accessible by the user. The user inputs into this table a control number definition in corresponding relation to the appropriate control number. The control number definition may be a printer control sequence, as defined by a specific printer for a printing function, or a file name of a file containing printer control sequences, or both.

In this way, the control number that was inserted into the text by the user can be identified with any specific printing function of a printer. The control number is defined not only as a specific string of hexadecimal values, but also as a file name of a file containing data to be sent to the printer. The ability to specify a file name permits print ready files, such as screen images, to be referenced within a document.

During the print task of the application, the control sequence referenced in the printer function table is substituted for the corresponding user defined code which was selectively positioned within the text data. The data stream of the edited text containing the printer control sequences for that printer is sent to the printer for printing.

In order that the invention may be fully understood it will now be described by way of example with reference to the accompanying drawings in which:

Fig. 1 shows a processing system apparatus for use with this invention.

Fig. 2 is a summary flow chart showing the three areas, text editor, profile task, and print task of an application which perform the steps of inserting a user defined control into a document, defining the user defined control with a printer control sequence, and printing the text document by replacing the user defined control within the text with the printer control sequence, respectively.

Fig. 3 shows the elements within the memory of the processing system for inserting a user defined control within the text of a document being edited in text editor mode.

Fig. 4 shows a flow chart during the text editor mode of the application for inserting a user defined control number within the text of a document being edited.

Fig. 5 shows the elements within the memory of the processing system for using the profile task of the application to define a user defined control in a printer function table with a printer control sequence.

Fig. 6 shows a flow chart during the profile task of the application for defining a user defined code in a printer function table with a printer control sequence.

Fig. 7 shows the elements within the memory of the processing system of this invention for using the print task of the application to print a document with the control sequences of printing functions inserted in the text data stream in place of the user defined codes.

Fig. 8 shows a summary flow chart of the print task of the application.

Fig. 9 shows a flow chart of the print task of the application for replacing the user defined codes within a text data stream with printer control sequences.

Fig. 10 shows a portion of the information contained in a printer function table.

Fig. 11 shows a display of text with a menu for selecting control numbers within the text.

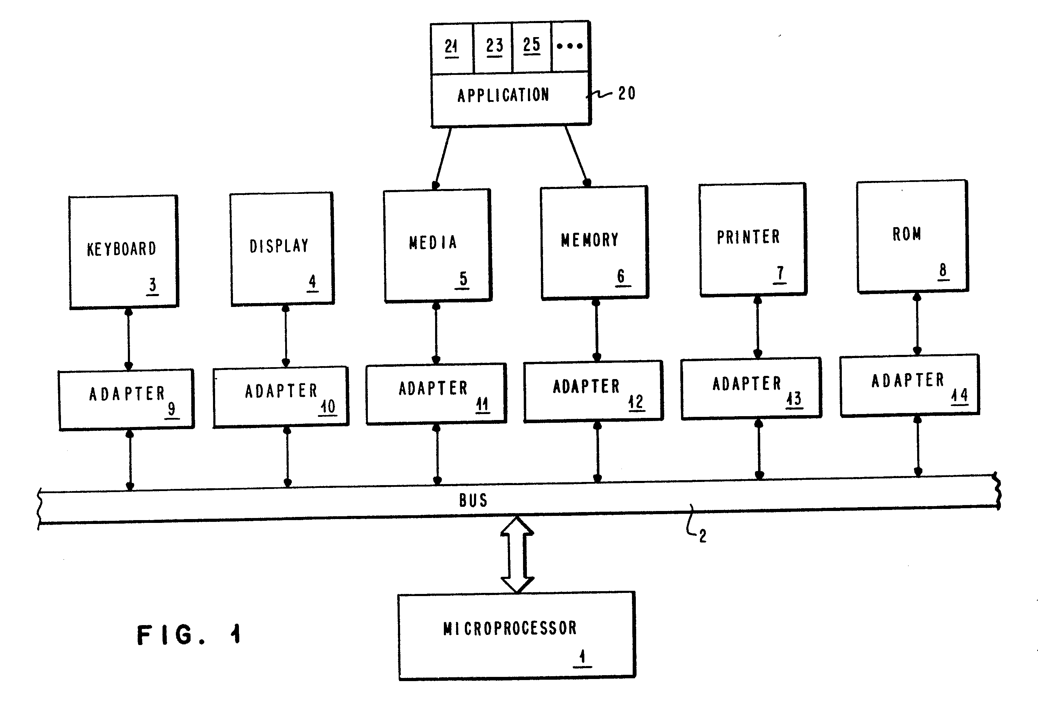

Beginning with reference to the block diagram of Fig 1, a generalized view of the processing apparatus which may be used to carry out the present invention is shown.

Fig. 1 shows a typical personal computer architecture, such as the configuration used in the IBM Personal Computer (IBM is a Registered Trade Mark). The focal point of this architecture comprises a microprocessor 1 which may, for example, be an Intel 8088 (Intel is a Registered Trade Mark) or similar microprocessor. The microprocessor 1 is connected to a bus 2 which comprises a set of data lines, a set of address lines and a set of control lines. A plurality of I/O devices or memory or storage devices 3-8 are connected to the bus 2 through separate adapters 9-14, respectively. For example, the display 4 may be the IBM Personal Computer Color Display and the adapter 10 may, accordingly, be the IBM Color/Graphics Adapter. The other devices 3 and 5-8 and adapters 9 and 11-14 are either included as part of an IBM Personal Computer or are available as plug-in options from the IBM Corporation. For example, the random access memory 6 and the read-only memory 8 and their corresponding adapters 12 and 14 are included as standard equipment in the IBM Personal Computer, although additional random access memory to supplement memory 6 may be added via a plug-in memory expansion option.

Within the read-only memory 8 are stored a plurality of instructions, known as the basic input/output operating system, or BIOS, for execution by the microprocessor 1. The BIOS controls the fundamental operations of the computer. An operating system such as the IBM Personal Computer Series Disk Operating System by Microsoft Corporation, or DOS, most commonly used with the IBM Personal Computer family, is loaded into the memory 6 and runs in conjunction with the BIOS stored in the ROM 8. It will be understood by those skilled in the art that the personal computer system could be configured so that parts or all of the BIOS are stored in the memory 6 rather than in the ROM 8 so as to allow modifications to the basic system operations by changes made to the BIOS program, which would then be readily loadable into the random access memory 6.

In the apparatus of this invention, an application program 20 such as a word processing program may also be loaded into the memory 6 or be resident on media 5. Media 5 may include, but is not limited to, a diskette, a hard file, or cassette tape. The application 20 comprises a comprehensive set of word processing tasks, including but not limited to, a text editor task 21, a profile task 23, and a print task 25. These tasks 21, 23, 25 provide instructions to the microprocessor 1 to enable the processing system shown in Fig. 1 to perform editing, profiling, and printing. An application program loaded into the memory 6 is said to run in conjunction with the disk operating system previously loaded into the memory 6.

Application 20 communicates with printer 7 through a communication linkage, represented by bus 2. In the processor of Fig. 1, the operator accesses the application 20 through operator control keys on keyboard 3. The keyboard drives the processor 1 which is operably connected to the display 4 as well as the media storage 5 and memory 6 through bus 2. As a user interacts through the keyboard 3 with application 20, the application 20 is displayed to the user through display 4.

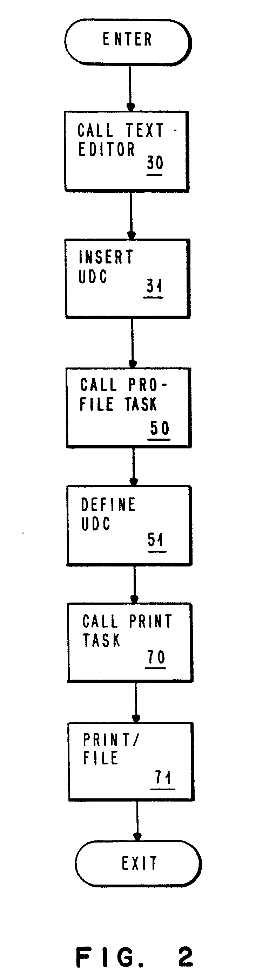

With reference to Fig. 2, the operation involved in the present invention will be generally described. To designate the printing functions to be performed by a printer 7 on text generated from an application 20, the user must interface with the text editor task 21 of the application 20. Thus, the text editor task must be called, step 30, from the application 20. This step allows a user to interact through the keyboard 3 with the application 20 to create, revise, and edit documents. While in the text editor task 21 of application 20, a user defined control (UDC), step 31, can be inserted into the text of the document at any selected location.

The next step, 50, calls the profile task 23 of application 20. While in the profile task 23, the user defines each user defined code (UDC), step 51, with a printer control sequence that is associated with a specific printing function of a printer. The printer control sequence for a printer is commonly defined in the manual associated with the particular printer.

When the print task 25 of application 20 is called, step 70, the printer control sequence that was defined for the UDC in step 51 is substituted for that user defined control (UDC) that was inserted in step 31. The text data stream comprising text characters and the printer control sequence is sent to the printer for printing or to a file to be printed at a later time, step 71.

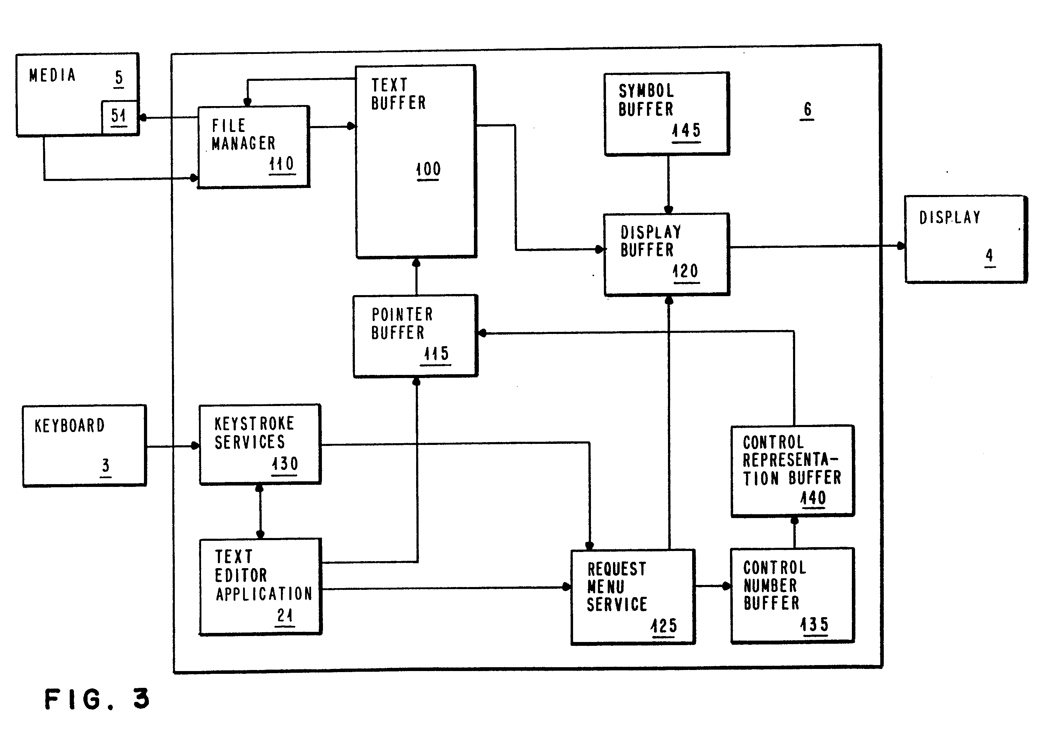

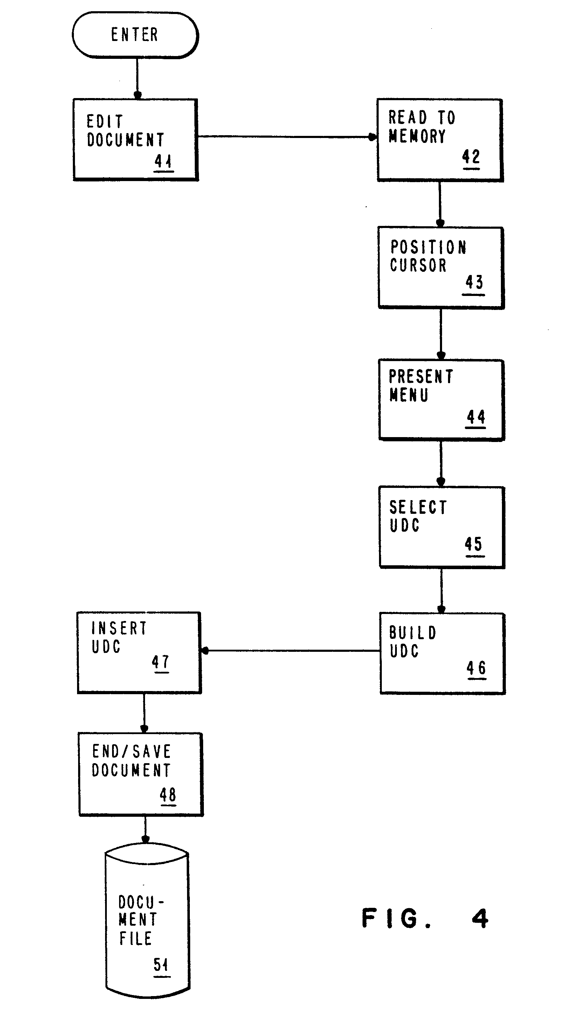

Calling the text editor step 30, and inserting the user defined code (UDC) step 31 of Fig. 2 is shown in more detail in the flow chart of Fig. 4. This flow chart will be further described in reference to the elements of memory 6, Fig. 3, which relate to the operation of this invention of inserting a user defined code (UDC) into a document being edited. The user inserts a user defined code at a desired location in the text as indicated by the position of a cursor to designate which printing functions of the printer are to be used.

As shown in Fig. 3, the text editor 21 of application 20 resides in memory 6 during the editing of a document, step 41 of Fig. 4. The text to be edited is read into memory 6, step 42, from media 5 by file manager 110. The text is stored in memory 6 in a text buffer 100. Prior to inserting a user defined control (UDC) within the text, step 47, a cursor must be positioned , step 43, at the desired location within the text. The text editor 21 receives a cursor positioning signal from keystroke services 130 corresponding to the user's input through the keyboard 3. The text editor 21 stores the cursor positioning signal in a pointer buffer 115. The pointer buffer 115 then moves the pointer correspondingly through the text data stream stored in the text buffer 100. The contents of the text buffer 100 with the cursor positioning information are sent to a display buffer 120 for display to the user.

When the cursor is positioned at a desired location, the user hits a designated key on the keyboard 3 as defined by the text editor 21. The text editor 21 receives the signal from the keyboard 3 from keystroke services 130 and requests a menu from request menu service 125. A menu 126, Fig. 11, is sent, step 44, from the text editor 21 through the request menu service 125 to a display buffer 120, and is displayed to the user, as shown in Fig 11. The menu displayed allows the user to select a control number, step 45, such as control number 1 through control number 999. The user selects this menu at every place within the text that the user requests a different printer function.

The control number 127, Fig. 11, selected by the user through the keyboard 3 goes through the request menu service 125 to the display buffer 120 to be displayed. The number selected is also sent to a control number buffer 135, and then into the control representation buffer 140.

The control representation buffer 140 contains a representation of the user defined code in a hexadecimal code sequence which contains the control number 127, Fig. 11, selected above imbedded within, step 46. The user defined control hex data stream in buffer 140 is inserted into the text data stream in the text buffer 100 at the location specified by the pointer buffer 115, step 47. The symbol buffer 145 substitutes a symbol such as "#" for the user defined code hex data stream when the text document is sent to display buffer 120 to be displayed to the user. Appearing on the display to the user is the symbol that was substituted for the user defined hex data stream. This symbol appears at the cursor position selected by the user. The edited text document containing user defined codes is saved, step 48, and sent to a document file 51 on media 5.

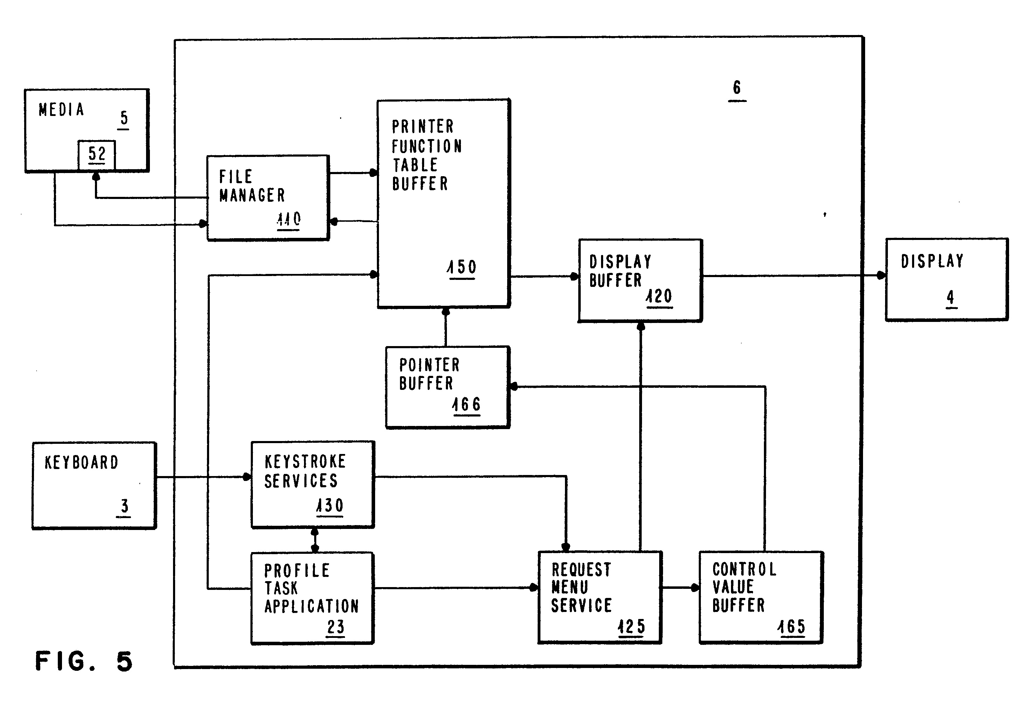

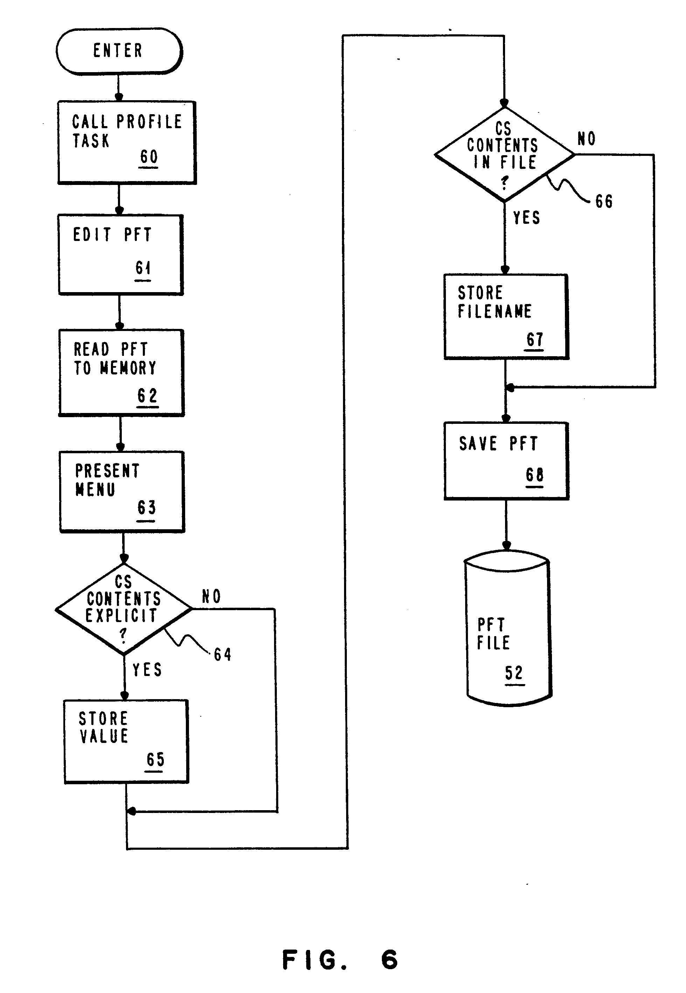

Calling the profile task step 50, Fig. 2, and defining the user defined code (UDC) step 51 of Fig. 2 is shown in more detail in the flow chart of Fig. 6. This flow chart will be further described in reference to the elements of memory 6, Fig. 5, which relate to the operation of this invention of defining a user defined code (UDC).

The user may define the user defined code (UDC) at any time while running application 20. This may occur immediately after inserting a control number into a document, or at a later time after the creation of several text documents which have been saved and filed, or before any text documents have been created.

Referring to Fig. 6, at any time a user desires to define the user defined code (UDC), the user calls the profile task 23 of application 20, step 60. Calling the profile task, step 60, requires the user to hit the appropriate key on the keyboard 3 while running the application 20. At this time the profile task 23 is sent to memory 6, Fig. 5. Calling the profile task 23 allows a user to edit the printer function table, (PFT) step 61. By editing the printer function table, a user can specify different control number definitions for any control number embedded in a user defined code that may have been inserted into an edited text as described above.

A control number definition may include a printer control sequence in hexadecimal code which identifies a specific printing function of a printer. The control number definition may also specify a file name of a file containing data to be sent to a printer. Additionally, the control number definition may include both a printer control sequence and a file name, or several control sequences and a file name. The file name may refer to a file that contains printer control sequences of specific printing functions. Additionally, the ability to specify a file name permits print ready files, such as screen images, to be referenced within a document. The print ready file contains control sequences that direct a printer to print a screen image a certain way, such as in all points addressable mode. A control number definition having a file of this type requires the user to adjust the length of the page to account for the space taken by the print ready file. Containing the printing function information in files allows one to change printing functions, or use different printers, without changing the document or the printer function table. Printing functions are changed by changing the contents of the file.

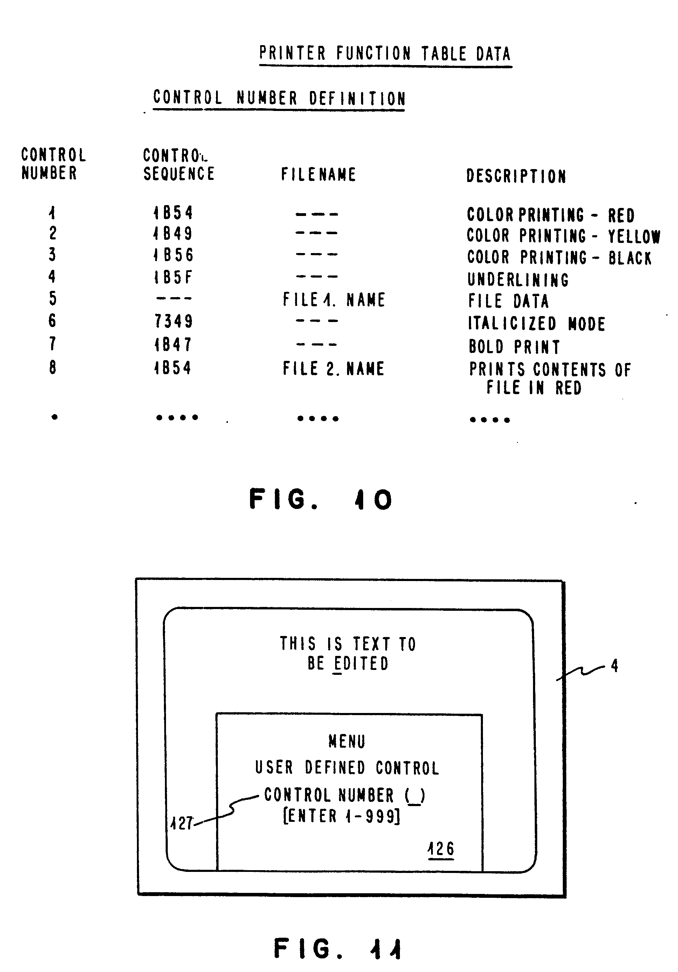

Editing the printer function table, step 61, is further described as follows. When the profile task 23 is sent to memory 6, a printer function table, as shown in Fig. 10, is sent to printer function table buffer 150, step 62. If any data from the printer function table has been previously filed on media 5, the file manager 110 is used to store it in the printer function table buffer 150. Upon the receipt of an appropriate signal from keystroke services 130, the request menu services 125 will present a menu from the profile task 23 to the display buffer 120, step 63. This menu along with any printer function table data associated with it is sent to the display buffer 120 to be displayed to the user on display 4.

Available to the user in the printer function table is a control number selection, such as control number 1 to control number 999, that has been used or will be used in text edited documents as described above. Through keystroke services 130, a user may add, modify, or delete printer control sequences or file names from any control number. A control sequence may define a printing function of a printer identified in the printer's manual as a hexadecimal code such a 1B49. Additionally, the user may specify a file name of a file containing control sequences. If the printing function for a control number is defined explicitly, step 64, as a printer's hex code, then that particular hex code is inserted through keystroke services 130 to correspond to the control number, step 65. If the control sequence for the printing function desired is contained in a file, step 66, then the file name is inserted through keystroke services 130, step 67. The hex code and/or file name is stored, step 65 or step 67 respectively, in control value buffer 165 and sent to the pointer buffer 166. The pointer buffer 166 inserts the value and/or filename in the printer function table to correspond to a control number as selected by the user through keystroke services 130.

Through appropriate keystrokes or from menu selection, the user saves the printer function table, step 68, and sends it to media 5 in the printer function table file 52.

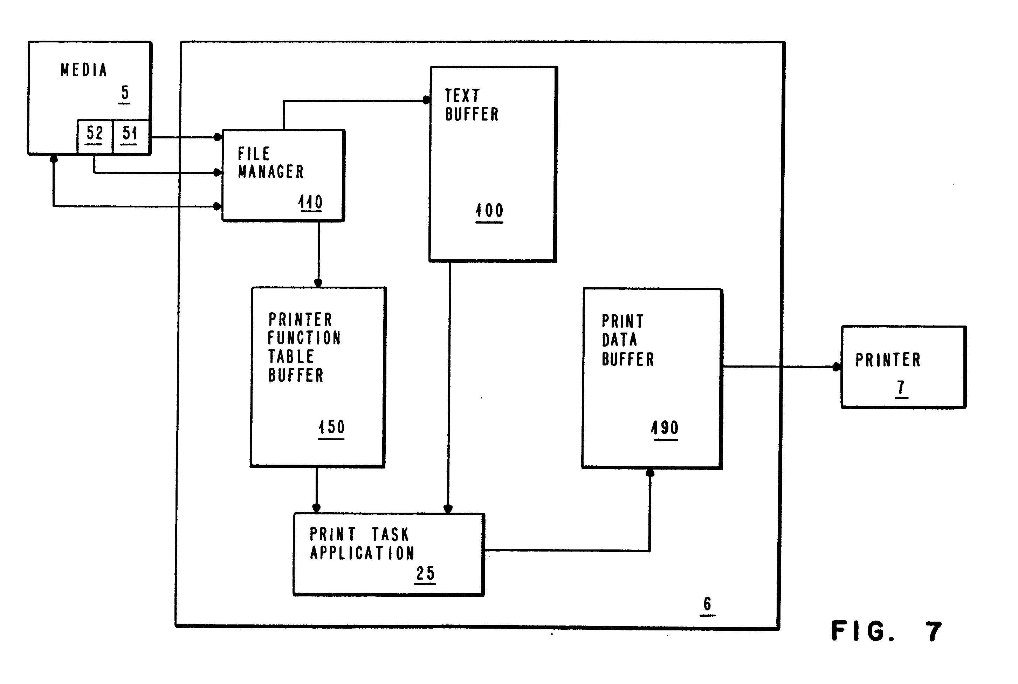

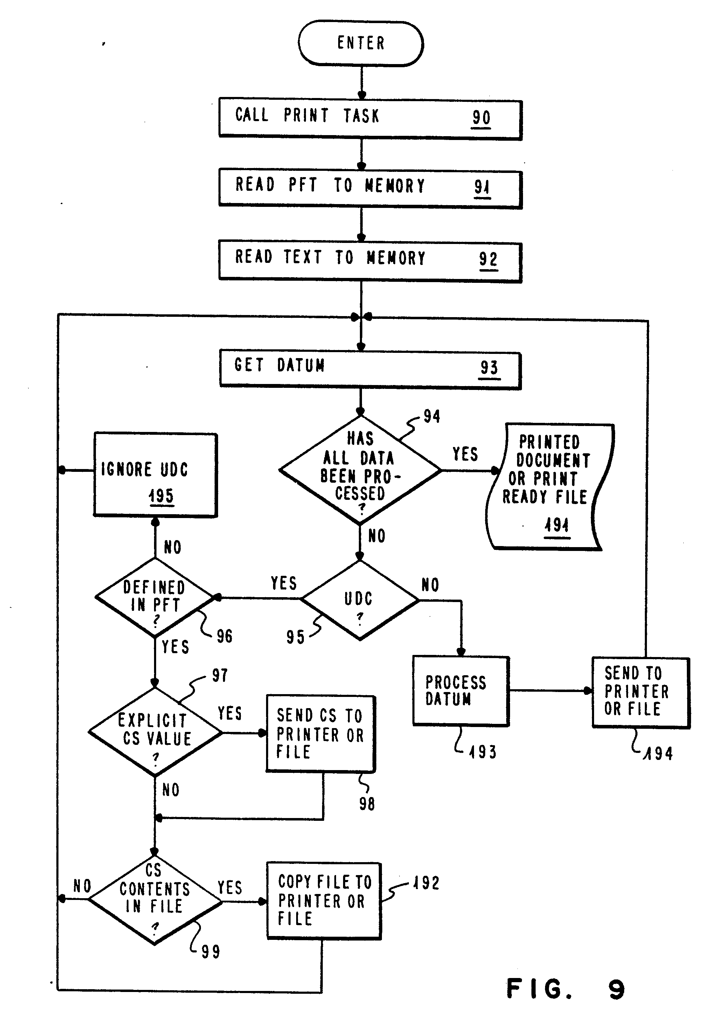

Calling the print task 25 of application 20, step 70 of Fig. 2, is shown in more detail in the flow chart of Fig. 9. The flow chart of Fig. 9 will be further described in reference to to the elements of memory 6, Fig. 7, which relate to the operation of this invention of printing a text document containing user defined printer codes for controlling the printed output of a document.

The user may print a document at any time while running application 20 on the processing system of Fig. 1. Calling the print task, step 90 of Fig. 9, requires the user to hit the appropriate key on the keyboard 3 while running the application 20. At this time, the print task 25 is sent to memory 6, Fig. 7. Calling the print task 25 allows a user to print a text document with the printing functions of the printer 7 that is connected to the processing system of Fig. 1.

Once the print task 25 is stored in memory 6, the file manager 110 gets from media 5 the files containing the document text 51 and the printer function table 52. The file manager 110 sends the text document data stream to text buffer 100, and the printer function table data stream to printer function table buffer 150, steps 91 and 92.

The print task 25 gets a datum, step 93, of text data from the text buffer 100. A datum refers to a character by character scan of the data stream. If the datum is not a user defined code, step 95, then it is processed as usual. If it is in hex code equal to the user defined code representation that was built in step 46 of Fig. 4, then the control number embedded is extracted. If the control number of the user defined code is not defined in the printer function table, step 96, then the code in the data stream is ignored, step 195, and the next text datum is examined. If the control number of the user defined code is defined in the printer function table, the print task looks to see if the user defined code in the printer function table is an explicit hex code value and/or whether it is a file name, step 97 and 99. If it is a hex code value representing a control sequence of a printer function, then that control sequence is sent to the print data buffer 190 for printing by printer 7 or to the document file to be printed later, step 98. If the control sequence in the printer function table is a file name, step 99, then the contents of the file is sent to the printer buffer 190 for printing or to the document file to be printed later, step 192. This processing loop continues until every datum or segment of the data stream of the document text is processed and sent to the printer buffer 190 or to the document print file to be printed later.

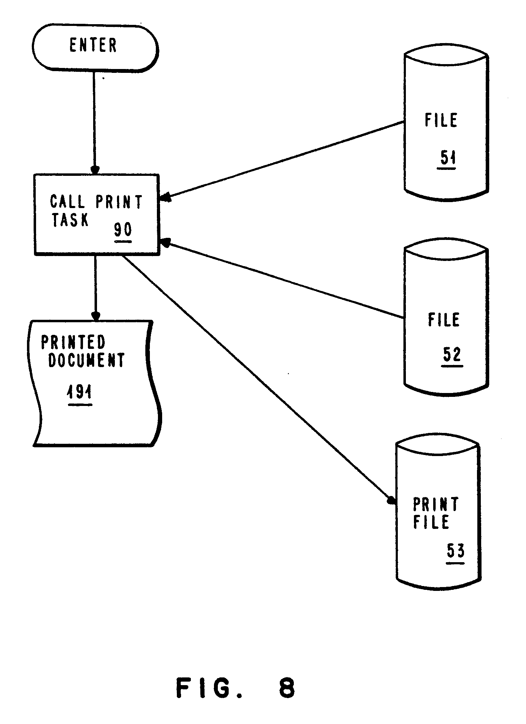

Fig. 8 summarizes the print task function. The print task gets the edited document text containing the user defined codes inserted within the document text from a file 51 that had been stored on media 5. It also gets the printer function table having a list of control numbers with a corresponding control sequence which defines a printing function from file 52 that had been stored on media 5. The print task substitutes the control sequence in the printer function table for the corresponding control number of the user defined code in the document text. This data stream of document text and printer control sequences is sent to a print file 53 to be printed later, or to a printer for printing a printed document 191.

The application of this invention allows a user to designate any of the text within a text edited document of the application to have many characteristics that a printer can perform through its printing functions.

In implementing the application of this invention, the user creates a document, uses a menu interface to insert the user defined control number that the user chooses for a specific printer function, ends the document, inputs printer control sequences for the corresponding control numbers into a printer function table of the application, and prints the document.

The method of this invention is utilized while a user is editing and inserting text into a document through an application such as a word processing program. At a point in the document where a user wants to implement a special function of the connected printer that is not specifically supported, the user hits the instruction key to bring up the user defined control menu. With this menu, the user chooses a number that the user has determined to represent the special function of the printer. After choosing the number from the menu, the user hits the "enter" key. At this time, the control number is inserted into the document at the point where the special printer function is requested. The user is then able to continue creating and revising text in the create/revise typing frame of the application. The user can also edit the control number inserted by adding or deleting control number in the text.

The user defines, in the Printer Function Table of the application, the meaning of each of the user defined control numbers used throughout the document. The Printer Function Table menu lets the user define an explicit set of hexadecimal bytes that will be sent to the printer. The Printer Function Table also allows the user to specify a file name which contains data to be sent to the printer.

At this point the user must refer to the manual of the printer that is being used in the processing system. The printer manual will list the control sequence that needs to be keyed in by the user to utilize a specific function of a printer. For example, to print in red, the manual may state that the hexadecimal code for printing in red is "1B6D". In this case, the user must define the user control number that the user selected in the document to mean print in red as "1B6D" in the Printer Function Table.

With the application of this invention, the user defined control allows the implementation of printer functions that are not specifically supported by the application. Additionally, the control number inserted into the document text is independent of the control sequence definition of printer functions as defined in the Printer Function Table. Consequently, if a document contained at various locations within the text a certain control number that was defined in the table for one printer function such as printing in red or underlining, by changing the table definition, that same control number could then define a different printer function, such as printing in black or emphasizing.

By changing the control number definition in the printer function table, the user doesn't have to change the control numbers inserted into the text to get a different printing function at that location. Furthermore, the printer function table within an application is applicable to any and all documents within the application. Therefor, by only making changes to the printer function table, a plurality of documents that contain user defined codes can be printed in any fashion without further editing each individual document text. Similarly, the same document could be printed on different printers having the same capabilities but different control sequences. Or, if the printers did have different capabilities, the same document could still be used with different printing functions being substituted, such as printing in italics where another printer printed in red.

Being able to insert within a text created document a user defined control number that signals a specific printer function, and defining in a Printer Function Table the user defined control number as the printer's hexadecimal control sequence code for that specific function, allows the following additional use of this invention.

One additional function of printers is fonts. The font function allows the printer to print characters in various shapes. For example, for a matrix printer, if an ASCII value is sent to the printer for a specific character, such as 65 for the letter "A", the printer will print the character in a standard shape. Many printers are programmable in the sense that the shapes of the characters can be changed, or what is actually printed for a given data stream sent to it. So instead of just sending the printer the ASCII value for a character, a file can be sent to the printer. A file instructs the printer that when it receives a specific ASCII value such as 65, to print it in a particular way. The file could instruct the printer to print an italic "A" or even to print another letter other than "A" which is usually associated with the ASCII value of 65. The printer could insert a Greek letter in place of the standard letter. The user defined control provides an easy mechanism for causing a printer to print something other than what is initially specified in a text data stream. This is accomplished by specifying in the Printer Function Table a file name which is the font that is to be down loaded to the printer. At print time, the user can dynamically change how the printer is going to print, and then switch it back again with an appropriate user define control at the end of the document.

At print time, the processing system scans the text data stream of the document, and sends to the printer the contents of the text data stream for printing. When the user defined control in the text data stream is reached, instead of sending the hex code for the control straight to the printer, the processing system extracts the control number from the user defined control representation, finds the control sequence for that control number in the printer function table, and sends to the printer the control sequence that had been defined for that control number in the Printer Function Table.

The printer then resumes printing as it did prior to running into a user defined control. However, in resuming printing, the printer prints the next characters in the text data stream according to the printing function that was defined by the control sequence for that printer. For example, the next characters may be printed in color, in bold type, underlined, in compressed mode, or in another font style. All printing functions of the printer are available. This printing function will continue until the next user defined control is reached in the text data stream sent to the printer.

## Claims

1. A method for controlling printing functions of a printer connected to a processing system having the ability to create and edit text documents, said method comprising:

inserting control numbers at specified locations in said text document; and

correlating independently from said document said control numbers with a control number definition.

2. The method of claim 1 wherein said control number definition comprises at least one printer control sequence and/or file name.

3. A printing method for use on a plurality of printers comprising:

preparing a document having generic printer controls;

correlating independently from said document said generic printer controls with a file having contents comprising printing function controls of one of said plurality of printers; and

printing said document on one of said plurality of printers operable to function under control of said printing function controls of said file.

4. The printing method of claim 3 further comprising the step of changing said contents of said file for printing said document on another of said plurality of printers.

5. A printing method for a plurality of printers comprising:

inserting generic printer controls into a document; and

creating a first table independent of said document for correlating said generic printer controls with specific printer control codes of one of said plurality of printers.

6. The printing method of claim 5 further comprising the step of creating a second table independent of said document for correlating said generic printer controls with specific printer controls of another of said plurality of printers.

7. A data processing system having an interactive display terminal, a printer, and an application running on said processing system for creating and editing text documents, wherein a data stream of said text document is sent to the printer, said processing system comprising:

means for displaying a menu having selectable control numbers;

means for inserting said selectable control numbers within the text documents;

a printer function table containing said selectable control numbers;

means for defining said selectable control numbers in said printer function table; and

means for replacing said selectable control numbers within the text document with said definition of said selectable control numbers from said printer function table.

8. The processing system of claim 7 wherein said selectable control numbers are inserted into the text document data stream and are replaced by said definitions of said control numbers in said text document data stream.

9. The processing system of claim 7 wherein said means for defining comprises a user interface to said printer function table for specifying a control number definition which includes at least one printer control sequence and or a file name.

10. A data processing system having an interactive display terminal, a printer, and an application running on said processing system for creating and editing text documents, wherein a data stream of said text document is sent to the printer, said processing system comprising:

means for inserting control numbers within the text documents;

a printer function table containing said control numbers;

means for defining said control numbers in said printer function table; and

means for replacing said control numbers within the text document with said definition of said control numbers from said printer function table in said data stream to said printer.

FIG. 1

0 250 777

F I G.  2

FIG. 3

0 250 777

**F I G . 4**

0 250 777

FIG. 5

DISPLAY 4

6

DISPLAY BUFFER 120

CONTROL VALUE BUFFER 165

REQUEST MENU SERVICE 125

PRINTER FUNCTION TABLE BUFFER 150

POINTER BUFFER 166

FILE MANAGER 140

KEYSTROKE SERVICES 130

PROFILE TASK APPLICATION 23

MEDIA 5 — 52

KEYBOARD 3

FIG. 6

FIG. 7

0 250 777

FIG. 8

```
                    ┌─────────────┐
                    │    ENTER    │
                    └─────────────┘
                           │
            ┌──────────────────────────────┐
            │  CALL  PRINT  TASK      90    │
            └──────────────────────────────┘
                           │
            ┌──────────────────────────────┐
            │  READ PFT TO MEMORY      91   │
            └──────────────────────────────┘
                           │
            ┌──────────────────────────────┐
            │  READ TEXT TO MEMORY     92   │
            └──────────────────────────────┘
                           │
            ┌──────────────────────────────┐
            │  GET DATUM               93   │
            └──────────────────────────────┘
```

HAS ALL DATA BEEN PROCESSED? 94 — YES → PRINTED DOCUMENT OR PRINT READY FILE 494

NO → UDC? 95

UDC? — YES → DEFINED IN PFT? 96

DEFINED IN PFT? — NO → IGNORE UDC 195

DEFINED IN PFT? — YES → EXPLICIT CS VALUE? 97

EXPLICIT CS VALUE? — YES → SEND CS TO PRINTER OR FILE 98

EXPLICIT CS VALUE? — NO → CS CONTENTS IN FILE? 99

CS CONTENTS IN FILE? — YES → COPY FILE TO PRINTER OR FILE 192

CS CONTENTS IN FILE? — NO

UDC? — NO → PROCESS DATUM 193 → SEND TO PRINTER OR FILE 194

**FIG. 9**

## PRINTER FUNCTION TABLE DATA

## CONTROL NUMBER DEFINITION

| CONTROL NUMBER | CONTROL SEQUENCE | FILENAME | DESCRIPTION |
|---|---|---|---|
| 1 | 1B54 | --- | COLOR PRINTING - RED |
| 2 | 1B49 | --- | COLOR PRINTING - YELLOW |
| 3 | 1B56 | --- | COLOR PRINTING - BLACK |
| 4 | 1B5F | --- | UNDERLINING |
| 5 | --- | FILE 1. NAME | FILE DATA |
| 6 | 7349 | --- | ITALICIZED MODE |
| 7 | 1B47 | --- | BOLD PRINT |
| 8 | 1B54 | FILE 2. NAME | PRINTS CONTENTS OF FILE IN RED |
| • | • • • • | • • • • | • • • • |

# FIG. 10

THIS IS TEXT TO
BE EDITED

~ 4

MENU
USER DEFINED CONTROL

CONTROL NUMBER (_)
[ENTER 1-999]

127

126

# FIG. 11